# EUROPEAN PATENT SPECIFICATION

(11) **EP 4 470 784 B1**
(45) Date of publication and mention of the grant of the patent: **04.03.2026**
(21) Application number: 23176146.1
(22) Date of filing: 30.05.2023
(51) Int. Cl.: B41J 3/407, G01N 1/28, G01N 1/36, B41J 2/44, G01N 35/00

(54) **MARKING ALL-IN-ONE MACHINE**
ALL-IN-ONE-MARKIERUNGSMASCHINE
MACHINE DE MARQUAGE TOUT-EN-UN

(43) Date of publication of application: 04.12.2024
(73) Proprietor: GUANGZHOU XIUWEI TECHNOLOGY CO., LTD., Guangzhou City Guangdong 511430 (CN)
(72) Inventor: CHEN, Jun, Guangzhou City, 511430 (CN); CHEN, Xi, Guangzhou City, 511430 (CN)
(74) Representative: Nederlandsch Octrooibureau

(56) References cited:
- CN-A- 111 633 342
- CN-U- 211 942 606
- CN-U- 215 883 054
- JP-A- 2018 069 295

## Description

### TECHNICAL FIELD

The present invention relates to the technical field of marking machines, in particular to a marking all-in-one machine.

### BACKGROUND

Pathology is a medical science that uses natural science methods to study the changes of etiology, pathogenesis, morphology, structure, function and metabolism of diseases, reveal the occurrence and development laws of diseases, thus clarifying the essence of diseases. In pathology, the dry work flow is divided into operating room, sampling, dehydration, embedding, slicing, spreading, baking, staining, sealing, reading, filing and other steps. Marking technology is needed when taking materials and slicing, and corresponding contents are marked on corresponding tissue cassettes and glass slides for recording and comparing patient information to prevent misdiagnosis of medical accidents caused by information errors.

In the existing marking technology, the marking in the material drawing process is separated from the marking during tissue slicing, and different marking equipment is used to complete marking. According to the existing sequence, the tissue cassettes are firstly marked in the process of taking materials, and then the glass slides of tissue slices are printed according to the information of the tissue cassettes. The two links are different in periods of time and are not unified. When the printed contents of the tissue cassettes are transferred to the slicing link, it is necessary to record the information for printing again, easily resulting in miss typing or non-corresponding information. The probability of information recording errors is increased.

Therefore, how to change the present situation that marking tissue cassettes and glass slides separately in the prior art easily leads to information errors has become an urgent problem for those skilled in the art.

CN 211942606 U discloses a marking all-in-one machine of glass slides and cassettes is provided, which includes a base 100, a support 200, a laser mechanism 300, a glass slide feeding and discharging mechanism 400, and a cassette feeding and discharging mechanism 500. The support 200 is disposed on the base 100, the laser mechanism 300 is disposed on the support 200, and the glass slide feeding and discharging mechanism 400 and the cassette feeding and discharging mechanism 500 are disposed on two sides of the base 100. The glass slide feeding and discharging mechanism 400 comprises a glass slide feeding assembly 410, a glass slide receiving plate 420 and a glass slide discharging assembly 430, and the glass slide receiving plate 420 is provided below a laser oscillating mirror 320. The cassette feeding and discharging mechanism 500 includes a cassette feeding assembly 510, a cassette slide rail 520, and a cassette discharging chute 530. The cassette feeding assembly 510 is disposed on one side of the base 100, and one end of the cassette slide rail 520 is connected to the cassette feeding assembly 510, the other end is connected to the output groove 530 of the cassette, and the cassette slide rail 520 is arranged below the laser vibrating mirror 320.

JP 2018069295 A discloses a marking device 100 (hereinafter referred to as marking device 100) for marking a marking slide glass 20 (hereinafter referred to as marking glass 20) 20 and a marking cassette 30 (hereinafter referred to as cassette 30) is an apparatus main body 1. The apparatus includes a slide glass marking device 2 and an cassette marking device 3. The marking apparatus 100 is a device that includes a laser light source and laser light irradiation means, and marks a marking glass and a cassette with laser light from the laser light irradiation means.

### SUMMARY

The present invention aims to provide a marking all-in-one machine so as to solve the problems in the prior art and improve the information recording accuracy.

In order to achieve the purpose, the present invention provides the following scheme. The present invention provides a marking all-in-one machine, including:
a first feeding unit, the first feeding unit including a first feeding chute, a first printing position and a first feeding mechanism, wherein the first feeding chute is configured to store tissue cassettes, and the first feeding mechanism is configured to transport the tissue cassettes in the first feeding chute to the first printing position;
a second feeding unit, the second feeding unit including a second feeding chute, a second printing position and a second feeding mechanism, wherein the second feeding chute is configured to store glass slides, and the second feeding mechanism is configured to transport the glass slides in the second feeding chute to the second printing position; and
a printing unit, the printing unit being arranged opposite to the first printing position and the second printing position, wherein the printing unit is configured to simultaneously mark the tissue cassettes and the glass slides.

In this invention, the first feeding unit also includes a feeding slideway. The first feeding chute communicates with the first printing position through the feeding slideway. The feeding slideway is arranged obliquely downward along the direction from the first feeding chute to the first printing position.

In this invention, a discharge port is formed in the bottom of the first feeding chute. The first feeding mechanism includes a first push plate and a first driver. The first push plate is slidably arranged at the discharge port. The output end of the first driver is in transmission connection with the first push plate. The first push plate and the feeding slideway are located on both sides of the first feeding chute.

In this invention, the first printing position is provided with a printing baffle. The printing baffle is configured to abut against the tissue cassette and block the tissue cassettes from continuing to slide along the feeding slideway. A through hole allowing the tissue cassettes to pass through is formed in the side, away from the first feeding chute, of the printing baffle. A distance is provided between the center of the through hole and the center line of the feeding slideway.

In this invention, the first feeding unit also includes a first collecting area. The first collecting area communicates with the feeding slideway through the through hole. The first feeding mechanism also includes a second push plate and a second driver. The output end of the second driver is connected with the second push plate. The second push plate is slidably arranged on one side of the printing baffle. The second push plate is configured to push the tissue cassettes so that the tissue cassettes are directly opposite to the through hole.

In this invention, the second feeding chute includes two symmetrically arranged positioning plates. Two fixed plates are matched to fix both ends of the glass slide. A feeding groove capable of accommodating the glass slides is formed in the bottom of the fixed plate. The feeding groove communicates with the second printing position.

In this invention, the second feeding mechanism includes a first push rod, a second push rod, a third driver and a fourth driver. The output end of the third driver is in transmission connection with the first push rod. The first push rod is slidably arranged on one side of the feeding groove.

In this invention, the second printing position is also connected with a second collecting area. The second collecting area communicates with the second printing position. The output end of the fourth driver is in transmission connection with the second push rod. The second push rod is slidably arranged on one side of the second printing position to push the glass slides at the second printing position into the second collecting area.

In this invention, a guide inclined plane is arranged at the communicating place between the second collecting area and the second printing position.

Preferably, the printing unit includes a laser generator, a seismograph and a field lens arranged in sequence. The exit surface of the field lens is arranged directly opposite to the first printing position and the second printing position.

Preferably, the marking all-in-one machine also includes a purifying unit. The purifying unit includes a purifying cylinder and a suction element. The suction element communicates with one end of the purifying cylinder, and the other end of the purifying cylinder is arranged toward the first printing position and the second printing position.

Compared with the prior art, the present invention has the following technical effects.

According to the marking all-in-one machine in the present invention, the first feeding mechanism is configured to transport the tissue cassettes stored in the first feeding chute to the first printing position. The second feeding mechanism is configured to transport the glass slides stored in the second feeding chute to the first printing position. The printing unit is configured to simultaneously carry out marking on the tissue cassettes and the glass slides. The first feeding unit and the second feeding unit are simultaneously arranged to simultaneously carry out marking on the tissue cassettes and the glass slides which are in one-to-one correspondence, and the problems of non-uniform marking, missing marking and the like are avoided, so that the accuracy of information recording is improved, and the work efficiency of marking is improved at the same time.

### BRIEF DESCRIPTION OF THE DRAWINGS

To more clearly illustrate the embodiment of the present invention or the technical scheme in the prior art, the following briefly introduces the attached figures to be used in the embodiment. Apparently, the attached figures in the following description show merely some embodiments of the present invention, and those skilled in the art may still derive other drawings from these attached figures without creative efforts.

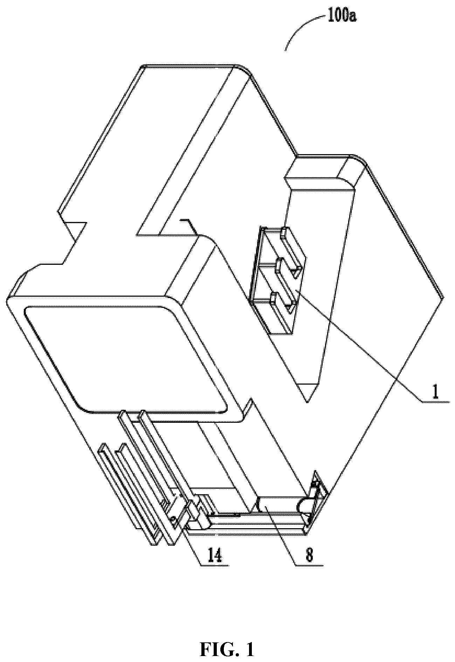

FIG. 1 is a structural schematic diagram a marking all-in-one machine in the present invention;

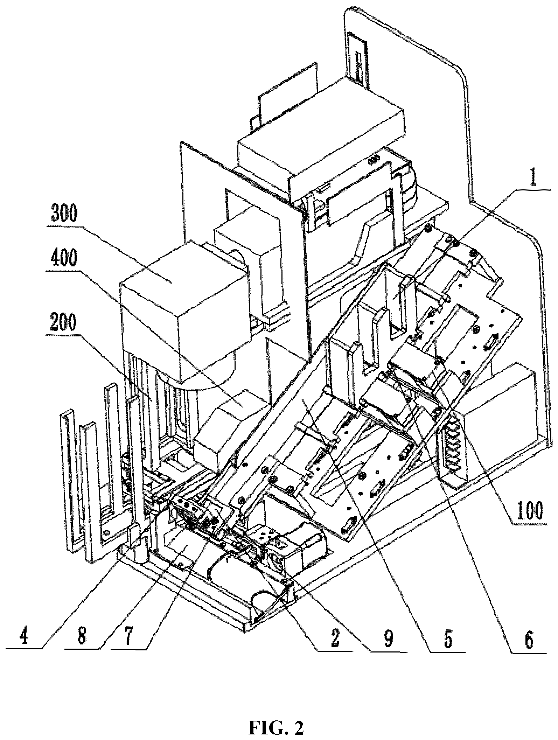

FIG. 2 is an internal structural schematic diagram of a marking all-in-one machine in the present invention; and

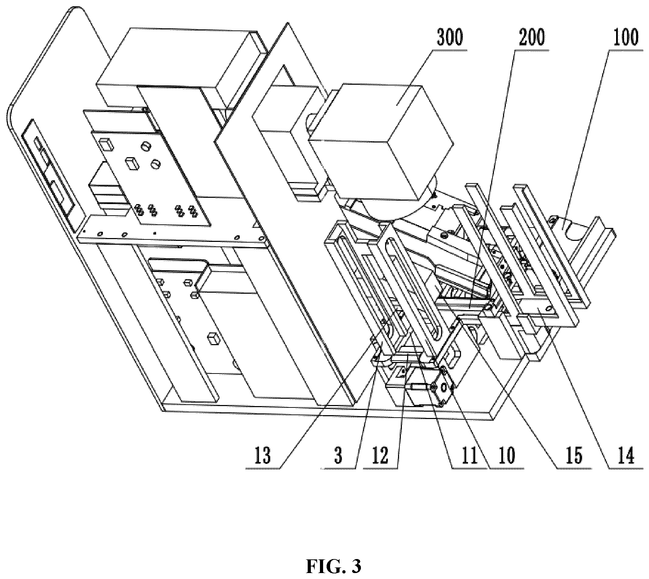

FIG. 3 is a partial structural schematic diagram of a marking all-in-one machine in the present invention.

Reference signs: 100a, marking all-in-one machine; 100, first feeding unit; 200, second feeding unit; 300, printing unit; 400, purifying unit;

1, first feeding chute; 2, first printing position; 3, second feeding chute; 4, second printing position; 5, feeding slideway; 6, first push plate; 7, printing baffle; 8, first collecting area; 9, second push plate; 10, positioning plate; 11, feeding groove; 12, first push rod; 13, second push rod; 14, second collecting area; and 15, purifying cylinder.

### DETAILED DESCRIPTION OF THE EMBODIMENTS

The following clearly and completely describes the technical scheme in the embodiments of the present invention with reference to the attached figures in the embodiments of the present invention. Apparently, the described embodiments are merely a part rather than all of the embodiments of the present invention. Based on the embodiment in the present invention, all other embodiments obtained by the ordinary technical staff in the art under the premise of without contributing creative labor belong to the scope protected by the present invention.

The present invention aims to provide a marking all-in-one machine so as to solve the problems in the prior art and improve the information recording accuracy.

To make the foregoing objective, features and advantages of the present invention clearer and more comprehensible, the present invention is further described in detail below with reference to the attached figures and specific embodiments.

The present invention provides a marking all-in-one machine 100a, including a first feeding unit 100, a second feeding unit 200 and a printing unit 300. The first feeding unit 100 includes a first feeding chute 1, a first printing position 2 and a first feeding mechanism. The first feeding chute 1 is configured to store tissue cassettes. The first feeding mechanism is configured to transport the tissue cassettes in the first feeding chute 1 to the first printing position 2. The second feeding unit 200 includes a second feeding chute 3, a second printing position 4 and a second feeding mechanism. The second feeding chute 3 is configured to store glass slides. The second feeding mechanism is configured to transport the glass slides in the second feeding chute 3 to the second printing position 4. The printing unit 300 is arranged opposite to the first printing position 2 and the second printing position 4. The printing unit 300 is configured to simultaneously mark the tissue cassettes and the glass slides.

According to the marking all-in-one machine 100a in the present invention, the first feeding mechanism is configured to transport the tissue cassettes stored in the first feeding chute 1 to the first printing position 2. The second feeding mechanism is configured to transport the glass slides stored in the second feeding chute 3 to the first printing position 2. The printing unit 300 is configured to simultaneously carry out marking on the tissue cassettes and the glass slides. The first feeding unit 100 and the second feeding unit 200 are simultaneously arranged to simultaneously carry out marking on the tissue cassettes and the glass slides which are in one-to-one correspondence, and the problems of non-uniform marking, missing marking and the like are avoided, so that the accuracy of information recording and the work efficiency of marking are improved.

The first feeding unit 100 also includes a feeding slideway 5. The first feeding chute 1 communicates with the first printing position 2 through the feeding slideway 5. The feeding slideway 5 is arranged obliquely downward along the direction from the first feeding chute 1 to the first printing position 2. The setting position of the first feeding chute 1 is higher. The first feeding mechanism pushes the tissue cassettes onto the feeding slideway 5. The tissue cassettes slide to the first printing position 2 along the feeding slideway 5 for marking.

Specifically, a discharge port is formed in the bottom of the first feeding chute 1. The first feeding mechanism includes a first push plate 6 and a first driver. The first push plate 6 is slidably arranged at discharge port. The output end of the first driver is in transmission connection with the first push plate 6. The first push plate 6 and the feeding slideway 5 are located on both sides of the first feeding chute 1. The tissue cassettes in the first feeding chute 1 are stacked along the vertical direction. The first driver drives the first push plate 6 to extend out. The tissue cassette at the bottom of the first feeding chute 1 is pushed out of the discharge port and onto the feeding slideway 5.

More specifically, the first printing position 2 is provided with a printing baffle 7. The printing baffle 7 is configured to abut against the tissue cassette and block the tissue cassettes from continuing to slide along the feeding slideway 5, so that the tissue cassettes stay at the first printing position 2 to complete marking. A through hole allowing the tissue cassettes to pass through is formed in the side, away from the first feeding chute 1, of the printing baffle 7. A distance is provided between the center of the through hole and the center line of the feeding slideway 5, so that a certain distance is deviated between the tissue cassette sliding along the feeding chute 5 and the through hole, the tissue cassette is prevented from sliding out directly from the through hole, and the printing reliability is ensured.

Preferably, the first feeding unit 100 also includes a first collecting area 8. The first collecting area 8 communicates with the feeding slideway 5 through the through hole. The first feeding mechanism also includes a second push plate 9 and a second driver. The output end the second driver is connected with the second push plate 9. The second push plate 9 is slidably arranged on one side of the printing baffle 7. The second push plate 9 is configured to push the tissue cassettes so that the tissue cassettes are directly opposite to the through hole. After the tissue cassettes are printed, the second push plate 9 pushes the tissue cassettes so that the tissue cassettes are directly opposite to the through hole and are led out to the first collecting area 8 from the through hole. The first collecting area 8 is of a strip-shaped groove structure, and the printed tissue cassettes enter the first collecting area 8 in turn for collection and standby.

In the specific embodiment, the second feeding chute 3 includes two symmetrically arranged positioning plates 10. Two fixed plates are matched to fix both ends of the glass slide. A feeding groove 11 capable of accommodating glass slides is formed in the bottom of the fixed plate. The feeding groove 11 communicates with second printing position 4. The glass slides are stacked between the two positioning plates 10 along the vertical direction. The lowest glass slide in the second feeding chute 3 falls into the feeding groove 11, and then the second feeding mechanism transports the glass slide to the second printing position 4 for printing.

Correspondingly, the second feeding mechanism includes a first push rod 12, a second push rod 13, a third driver and a fourth driver. The output end of the third driver is in transmission connection with the first push rod 12. The first push rod 12 is slidably arranged on one side of the feeding groove 11. The first push rod 12 is configured to push the lowest glass slide in the first feeding chute 1 to the second printing position 4 for printing.

In order to collect the printed glass slides, the second printing position 4 is also connected with a second collecting area 14. The second collecting area 14 communicates with the second printing position 4. The output end of the fourth driver is in transmission connection with the second push rod 13. The second push rod 13 is slidably arranged on one side of the second printing position 4 to push the glass slides at the second printing position 4 into second collecting area 14. The second push rod 13 pushes the printed glass slides into the second collecting area 14 for collection and standby.

It also should be noted that a guide inclined plane is arranged at the communicating place between the second collecting area 14 and the second printing position 4. In the specific embodiment, the second collecting area 14 is of a frame structure. The printed glass slides are stacked along the vertical direction in the second collecting area 14. Under the action of the second push rod 13, the printed glass slides are "inserted" at the bottom of the stacked glass slides, and the guide inclined plane is arranged to smoothly insert the glass slides. The glass slides in the second collecting area 14 are arranged from top to bottom according to the printing sequence, and are convenient to take and use. The operator does not need to re-classify and screen the glass slides for the second time, so that the accuracy of information recording is further improved.

Further, the printing unit 300 includes a laser generator, a seismograph and field lens arranged in sequence. The exit surface of the field lens is arranged directly opposite to the first printing position 2 and the second printing position 4. Laser printing and non-contact printing are adopted, so that the printing speed is high, and the definition is high.

The marking all-in-one machine 100a in the present invention also includes a purifying unit 400. The purifying unit 400 includes a purifying cylinder 15 and a suction element. The suction element communicates with one end of the purifying cylinder 15, and the other end of the purifying cylinder 15 is arranged toward the first printing position 2 and the second printing position 4. The suction element may be a suction pump, and dust generated by printing is sucked by the purifying cylinder 15, so that subsequent printing is avoided from being influenced, the printing quality is ensured, and the operators are protected at the same time.

Specific examples are used for illustration of the principles and implementation methods of the present invention. The description of the above-mentioned embodiments is used to help illustrate the method and its core principles of the present invention. In addition, those skilled in the art may make various modifications in terms of specific embodiments and scope of application in accordance with the teachings of the present invention, which is defined by the appended claims. In conclusion, the content of this specification shall not be construed as a limitation to the present invention.

## Claims

1. A marking all-in-one machine, comprising:
a first feeding unit (100), the first feeding unit comprising a first feeding chute (1), a first printing position (2) and a first feeding mechanism, wherein the first feeding chute (1) is configured to store tissue cassettes, and the first feeding mechanism is configured to transport the tissue cassettes in the first feeding chute (1) to the first printing position (2);
a second feeding unit (200), the second feeding unit comprising a second feeding chute (3), a second printing position (4) and a second feeding mechanism, wherein the second feeding chute (3) is configured to store glass slides, and the second feeding mechanism is configured to transport the glass slides in the second feeding chute (3) to the second printing position (4); and
a printing unit (300), the printing unit being arranged opposite to the first printing position (2) and the second printing position (4), wherein the printing unit (300) is configured to simultaneously mark the tissue cassettes and the glass slides;
wherein the first feeding unit (100) also comprises a feeding slideway (5), the first feeding chute (1) communicates with the first printing position (2) through the feeding slideway (5), and the feeding slideway (5) is arranged obliquely downward along the direction from the first feeding chute (1) to the first printing position (2);
wherein the first printing position (2) is provided with a printing baffle (7), the printing baffle (7) is configured to abut against the tissue cassette and block the tissue cassettes from continuing to slide along the feeding slideway (5);
wherein the first feeding unit (100) also comprises a first collecting area (8), the first collecting area (8) communicates with the feeding slideway (5) through the through hole;
the marking all-in-one machine is **characterized by** that:
the second feeding chute (3) comprises two symmetrically arranged positioning plates (10), two fixed plates are matched to fix both ends of the glass slide, a feeding groove (11) capable of accommodating the glass slides is formed in the bottom of the fixed plate, and the feeding groove (11) communicates with the second printing position (4);
the second feeding mechanism comprises a first push rod (12), a second push rod (13), a third driver and a fourth driver, the output end of the third driver is in transmission connection with the first push rod (12), and the first push rod (12) is slidably arranged on one side of the feeding groove (11);
the second printing position (4) is also connected with a second collecting area (14), the second collecting area (14) communicates with the second printing position (4), the output end of the fourth driver is in transmission connection with the second push rod (13), and the second push rod (13) is slidably arranged on one side of the second printing position (4) to push the glass slides at the second printing position (4) into the second collecting area (14);
a through hole allowing the tissue cassettes to pass through is formed in the side, away from the first feeding chute (1), of the printing baffle (7), and a distance is provided between the center of the through hole and the center line of the feeding slideway (5); the first feeding mechanism also comprises a second push plate (9) and a second driver, the output end of the second driver is connected with the second push plate (9), the second push plate (9) is slidably arranged on one side of the printing baffle (7), and the second push plate (9) is configured to push the tissue cassettes so that the tissue cassettes are directly opposite to the through hole; and
a guide inclined plane is arranged at the communicating place between the second collecting area (14) and the second printing position (4).

2. The marking all-in-one machine according to claim 1, wherein a discharge port is formed in the bottom of the first feeding chute (1), the first feeding mechanism comprises a first push plate (6) and a first driver, the first push plate (6) is slidably arranged at the discharge port, the output end of the first driver is in transmission connection with the first push plate (6), and the first push plate (6) and the feeding slideway (5) are located on both sides of the first feeding chute (1)

3. The marking all-in-one machine according to any one of claims 1-2, wherein the printing unit (300) comprises a laser generator, a seismograph and a field lens arranged in sequence, and the exit surface of the field lens is arranged opposite to the first printing position (2) and the second printing position (4).

4. The marking all-in-one machine according to any one of claims 1-2 also comprising a purifying unit (400), wherein the purifying unit (400) comprises a purifying cylinder (15) and a suction element, the suction element communicates with one end of the purifying cylinder (15), and the other end of the purifying cylinder (15) is arranged toward the first printing position (2) and the second printing position (4).

## Patentansprüche

1. Markierungskomplettmaschine, umfassend:
eine erste Zuführeinheit (100), wobei die erste Zuführeinheit einen ersten Zuführschacht (1), eine erste Druckposition (2) und einen ersten Zuführmechanismus umfasst, wobei der erste Zuführschacht (1) konfiguriert ist, Gewebekassetten zu lagern, und der erste Zuführmechanismus konfiguriert ist, die Gewebekassetten in dem ersten Zuführschacht (1) zu der ersten Druckposition (2) zu transportieren;
eine zweite Zuführeinheit (200), wobei die zweite Zuführeinheit einen zweiten Zuführschacht (3), eine zweite Druckposition (4) und einen zweiten Zuführmechanismus umfasst, wobei der zweite Zuführschacht (3) konfiguriert ist, Objektträger zu lagern, und der zweite Zuführmechanismus konfiguriert ist, die Objektträger in dem zweiten Zuführschacht (3) zu der zweiten Druckposition (4) zu transportieren; und
eine Druckeinheit (300), wobei die Druckeinheit gegenüberliegend zu der ersten Druckposition (2) und der zweiten Druckposition (4) angeordnet ist, wobei die Druckeinheit (300) konfiguriert ist, die Gewebekassetten und die Objektträger gleichzeitig zu markieren;
wobei die erste Zuführeinheit (100) auch eine Zuführgleitbahn (5) umfasst, der erste Zuführschacht (1) mit der ersten Druckposition (2) durch die Zuführgleitbahn (5) in Verbindung steht, und die Zuführgleitbahn (5) schräg nach unten entlang der Richtung von dem ersten Zuführschacht (1) zu der ersten Druckposition (2) angeordnet ist;
wobei die erste Druckposition (2) mit einer Druckprallplatte (7) versehen ist, die Druckprallplatte (7) konfiguriert ist, an der Gewebekassette anzuliegen und die Gewebekassetten daran zu hindern, entlang der Zuführgleitbahn (5) fortzusetzen zu gleiten;
wobei die erste Zuführeinheit (100) auch einen ersten Sammelbereich (8) umfasst, der erste Sammelbereich (8) mit der Zuführgleitbahn (5) durch das Durchgangsloch in Verbindung steht; die Markierungskomplettmaschine **dadurch gekennzeichnet, dass**:
der zweite Zuführschacht (3) zwei symmetrisch angeordnete Positionierplatten (10) umfasst, zwei Fixierplatten zusammenwirken, um beide Enden des Objektträgers zu fixieren, eine Zuführnut (11), die in der Lage ist, die Objektträger aufzunehmen, in dem Boden der Fixierplatte ausgebildet ist, und die Zuführnut (11) mit der zweiten Druckposition (4) in Verbindung steht;
der zweite Zuführmechanismus eine erste Schubstange (12), eine zweite Schubstange (13), einen dritten Antrieb und einen vierten Antrieb umfasst, das Ausgangsende des dritten Antriebs in Übertragungsverbindung mit der ersten Schubstange (12) ist, und die erste Schubstange (12) verschiebbar auf einer Seite der Zuführnut (11) angeordnet ist;
die zweite Druckposition (4) auch mit einem zweiten Sammelbereich (14) verbunden ist, der zweite Sammelbereich (14) mit der zweiten Druckposition (4) in Verbindung steht, das Ausgangsende des vierten Antriebs in Übertragungsverbindung mit der zweiten Schubstange (13) ist, und die zweite Schubstange (13) verschiebbar auf einer Seite der zweiten Druckposition (4) angeordnet ist, um die Objektträger an der zweiten Druckposition (4) in den zweiten Sammelbereich (14) zu schieben;
ein Durchgangsloch, das den Gewebekassetten erlaubt, hindurchzutreten, in der Seite, die von dem ersten Zuführschacht (1) entfernt ist, der Druckprallplatte (7) ausgebildet ist, und ein Abstand zwischen dem Zentrum des Durchgangslochs und der Mittellinie der Zuführgleitbahn (5) vorgesehen ist; der erste Zuführmechanismus auch eine zweite Schubplatte (9) und einen zweiten Antrieb umfasst, das Ausgangsende des zweiten Antriebs mit der zweiten Schubplatte (9) verbunden ist, die zweite Schubplatte (9) verschiebbar auf einer Seite der Druckprallplatte (7) angeordnet ist, und die zweite Schubplatte (9) konfiguriert ist, die Gewebekassetten zu schieben, so dass die Gewebekassetten direkt gegenüberliegend zu dem Durchgangsloch sind; und
eine Führungsschrägfläche an der Verbindungsstelle zwischen dem zweiten Sammelbereich (14) und der zweiten Druckposition (4) angeordnet ist.

2. Markierungskomplettmaschine nach Anspruch 1, wobei eine Auslassöffnung in dem Boden des ersten Zuführschachts (1) ausgebildet ist, der erste Zuführmechanismus eine erste Schubplatte (6) und einen ersten Antrieb umfasst, die erste Schubplatte (6) verschiebbar an der Auslassöffnung angeordnet ist, das Ausgangsende des ersten Antriebs in Übertragungsverbindung mit der ersten Schubplatte (6) ist, und die erste Schubplatte (6) und die Zuführgleitbahn (5) auf beiden Seiten des ersten Zuführschachts (1) angeordnet sind.

3. Markierungskomplettmaschine nach einem der Ansprüche 1 bis 2, wobei die Druckeinheit (300) einen Lasergenerator, einen Seismograph und eine Feldlinse, die in Reihenfolge angeordnet sind, umfasst, und die Austrittsfläche der Feldlinse gegenüberliegend zu der ersten Druckposition (2) und der zweiten Druckposition (4) angeordnet ist.

4. Markierungskomplettmaschine nach einem der Ansprüche 1 bis 2, auch umfassend eine Reinigungseinheit (400), wobei die Reinigungseinheit (400) einen Reinigungszylinder (15) und ein Saugelement umfasst, das Saugelement mit einem Ende des Reinigungszylinders (15) in Verbindung steht, und das andere Ende des Reinigungszylinders (15) in Richtung der ersten Druckposition (2) und der zweiten Druckposition (4) angeordnet ist.

## Revendications

1. Machine tout-en-un de marquage, comprenant :
une première unité d'alimentation (100), la première unité d'alimentation comprenant une goulotte d'alimentation principale (1), une première position d'impression (2) et un premier mécanisme d'alimentation, dans laquelle la goulotte d'alimentation principale (1) est configurée pour stocker des cassettes à tissu, et le premier mécanisme d'alimentation est configuré pour transporter les cassettes à tissu dans la goulotte d'alimentation principale (1) vers la première position d'impression (2) ;
une deuxième unité d'alimentation (200), la deuxième unité d'alimentation comprenant une deuxième goulotte d'alimentation (3), une deuxième position d'impression (4) et un deuxième mécanisme d'alimentation, dans laquelle la deuxième goulotte d'alimentation (3) est configurée pour stocker des lames de verre, et le deuxième mécanisme d'alimentation est configuré pour transporter les lames de verre dans la deuxième goulotte d'alimentation (3) vers la deuxième position d'impression (4) ; et
une unité d'impression (300), l'unité d'impression étant disposée en face de la première position d'impression (2) et de la deuxième position d'impression (4), dans laquelle l'unité d'impression (300) est configurée pour marquer simultanément les cassettes à tissu et les lames de verre ;
dans laquelle la première unité d'alimentation (100) comprend également une glissière d'alimentation (5), la goulotte d'alimentation principale (1) communique avec la première position d'impression (2) par l'intermédiaire de la glissière d'alimentation (5), et la glissière d'alimentation (5) est disposée obliquement vers le bas le long de la direction allant de la goulotte d'alimentation principale (1) à la première position d'impression (2) ;
dans laquelle la première position d'impression (2) est pourvue d'un déflecteur d'impression (7), le déflecteur d'impression (7) est configuré pour venir en butée contre la cassette à tissu et bloquer les cassettes à tissu pour qu'elles ne continuent pas à glisser le long de la glissière d'alimentation (5) ;
dans laquelle la première unité d'alimentation (100) comprend également une première zone de collecte (8), la première zone de collecte (8) communique avec la glissière d'alimentation (5) par l'intermédiaire du trou traversant ;
la machine tout-en-un de marquage est **caractérisée en ce que** :
la deuxième goulotte d'alimentation (3) comprend deux plaques de positionnement (10) qui sont disposées symétriquement, deux plaques fixes sont adaptées pour fixer les deux extrémités de la lame de verre, une rainure d'alimentation (11) capable de recevoir les lames de verre est formée dans le fond de la plaque fixe, et la rainure d'alimentation (11) communique avec la deuxième position d'impression (4) ;
le deuxième mécanisme d'alimentation comprend une première tige de poussée (12), une deuxième tige de poussée (13), un troisième actionneur et un quatrième actionneur, l'extrémité de sortie du troisième actionneur est en liaison de transmission avec la première tige de poussée (12), et la première tige de poussée (12) est disposée de manière coulissante sur un côté de la rainure d'alimentation (11) ;
la deuxième position d'impression (4) est également reliée à une deuxième zone de collecte (14), la deuxième zone de collecte (14) communique avec la deuxième position d'impression (4), l'extrémité de sortie du quatrième actionneur est en liaison de transmission avec la deuxième tige de poussée (13), et la deuxième tige de poussée (13) est disposée de manière coulissante sur un côté de la deuxième position d'impression (4) pour pousser les lames de verre à la deuxième position d'impression (4) dans la deuxième zone de collecte (14) ;
un trou traversant permettant aux cassettes à tissu de passer est formé dans le côté, éloigné de la goulotte d'alimentation principale (1), du déflecteur d'impression (7), et une distance est prévue entre le centre du trou traversant et la ligne centrale de la glissière d'alimentation (5) ; le premier mécanisme d'alimentation comprend également une deuxième plaque de poussée (9) et un deuxième actionneur, l'extrémité de sortie du deuxième actionneur est reliée à la deuxième plaque de poussée (9), la deuxième plaque de poussée (9) est disposée de manière coulissante sur un côté du déflecteur d'impression (7), et la deuxième plaque de poussée (9) est configurée pour pousser les cassettes à tissu de sorte que les cassettes à tissu soient directement en face du trou traversant ; et
un plan incliné de guidage est disposé à l'endroit de communication entre la deuxième zone de collecte (14) et la deuxième position d'impression (4).

2. Machine tout-en-un de marquage selon la revendication 1, dans laquelle un orifice de décharge est formé dans le fond de la goulotte d'alimentation principale (1), le premier mécanisme d'alimentation comprend une première plaque de poussée (6) et un premier actionneur, la première plaque de poussée (6) est disposée de manière coulissante au niveau de l'orifice de décharge, l'extrémité de sortie du premier actionneur est en liaison de transmission avec la première plaque de poussée (6), et la première plaque de poussée (6) et la glissière d'alimentation (5) sont situées sur les deux côtés de la goulotte d'alimentation principale (1).

3. Machine tout-en-un de marquage selon l'une quelconque des revendications 1 à 2, dans laquelle l'unité d'impression (300) comprend un générateur laser, un galvanomètre et une lentille de champ qui sont disposés en séquence, et la surface de sortie de la lentille de champ est disposée en face de la première position d'impression (2) et de la deuxième position d'impression (4).

4. Machine tout-en-un de marquage selon l'une quelconque des revendications 1 à 2 comprenant également une unité de purification (400), dans laquelle l'unité de purification (400) comprend un cylindre de purification (15) et un élément d'aspiration, l'élément d'aspiration communique avec une extrémité du cylindre de purification (15), et l'autre extrémité du cylindre de purification (15) est disposée vers la première position d'impression (2) et la deuxième position d'impression (4).
